# EUROPÄISCHE PATENTANMELDUNG

(11) **EP 1 184 952 A2**
(43) Veröffentlichungstag der Anmeldung: **06.03.2002**
(21) Anmeldenummer: 01115070.3
(22) Anmeldetag: 21.06.2001
(51) Int. Cl.: H02J 7/00

(54) **Symmetrierschaltung für in Reihe geschaltete elektrische Energiespeicherelemente**

(30) Priorität: 12.08.2000 DE 10039407
(71) Anmelder: EnBW Energie Baden-Württemberg AG, 76131 Karlsruhe (DE)
(72) Erfinder: Becker, Klaus-Peter, Dipl.-Ing., 76139 Karlsruhe (DE)
(74) Vertreter: Kaiser, Magnus, Dipl.-Phys.

(57) **Zusammenfassung**

Es wird eine Symmetrierschaltung für in Reihe geschaltete elektrische Energiespeicherelemente, insbesondere Kondensatoren (C₁,C₂), vorgeschlagen. Jedes Energiespeicherelement ist mit einer Bypass-Schaltung (3bzw.4) zum Begrenzen der Ladespannung versehen, welche eine vom Energiespeicherelement gespeiste, spannungsgesteuerte Stromquelle (1bzw.2) zum Generieren eines Bypass-Stroms enthält. Die Bypass-Schaltung nimmt also ab einem voreingestellten Wert für die Nennspannung einen zunehmenden Anteil des Ladestroms auf und schützt so das jeweilige Energiespeicherelement vor einer Überlastung. Die spannungsgesteuerte Stromquelle wird vorzugsweise durch einen Leistungstransistor realisiert, der ein MOSFET oder ein Bipolartransistor sein kann. Besonders vorteilhaft wird diese Symmetrierschaltung bei Energiespeichern eingesetzt, die eine Anzahl von in Reihe geschalteten Kondensatoren, insbesondere Doppelschichtkondensatoren enthalten.

## Beschreibung

Die Erfindung betrifft eine Symmetrierschaltung für in Reihe geschaltete elektrische Energiespeicherelemente, insbesondere Kondensatoren, mit je einer für jedes Energiespeicherelement vorgesehenen Bypass-Schaltung zum Begrenzen der Ladespannung am jeweiligen Energiespeicherelement durch zumindest teilweise Umleitung des Ladestroms auf die Bypass-Schaltung, sowie einen Energiespeicher, insbesondere zur Stromausfallpufferung, mit einer Anzahl von in Reihe geschalteten elektrischen Energiespeicherelementen und je einer Symmetrierschaltung für jedes Energiespeicherelement.

Elektrische Energiespeicherelemente, wie Kondensatoren, verfügen gemeinhin über einen begrenzten Energieinhalt, der nicht für alle Anwendungsfälle ausreicht. Es ist daher meist nötig, solche Energiespeicherelemente zu Speichermodulen zusammenzuschalten. Um hierbei hohe Spannungswerte erreichen zu können - wie dies insbesondere bei einer Stromausfallpufferung für am Stromnetz betriebene Geräte unverzichtbar ist ― müssen bei niedrigen Nennspannungswerten der Einzelelemente eine Vielzahl von Energiespeicherelementen in Reihe geschaltet werden.

Insbesondere beim Aufladen von in Reihe geschalteten elektrischen Energiespeicherelementen muss gewährleistet sein, dass kein einziges der Energiespeicherelemente spannungsmäßig überlastet wird. Sowohl bei Akkumulatoren als auch bei Kondensatoren kann die Gefahr einer Überlastung eines einzelnen Elements beim Aufladen bestehen, wenn dieser bereits auf die Nennspannung aufgeladen ist, während andere Elemente noch deutlich von der Nennspannung entfernt sind und deshalb noch weiter aufgeladen werden.

Besonders leistungsfähig, aber auch mit einer ungewöhnlich kleinen Nennspannung versehen sind Doppelschichtkondensatoren, die kein elektrisch isolierendes Dielektrikum enthalten, sondern zwischen ihren beiden Elektroden einen Elektrolyten aufweisen: Die Speicherung der elektrischen Energie erfolgt hier durch Ladungsverschiebung an den Grenzflächen zwischen den Elektroden und dem Elektrolyten. Hierdurch werden sehr große Kapazitätswerte erzielt, wobei gleichzeitig jedoch die zulässige Spannung auf wenige Volt, typischerweise etwa 2,7 V beschränkt ist, da es darüber zu irreversiblen Veränderung des Elektrolyten kommen kann. Die höchstzulässige, praktisch nutzbare Spannung an einem mit solchen Kondensatoren in Reihenschaltung aufgebauten Speichermodul ist dadurch begrenzt, dass kein einzelner Kondensator sein zulässiges Spannungsmaximum überschreiten darf. Diese höchstzulässige Spannung liegt im allgemeinen deutlich unter der theoretischen Grenze von idealen Elementen. Dies ist deshalb besonders nachteilig, weil sowohl die speicherbare Energie als auch die entnehmbare Maximalleistung quadratisch von der Modulspannung abhängen.

Um den Nenn-Energieinhalt eines jeden einzelnen Kondensators voll ausnutzen zu können, wird daher jeder Kondensator mit einer Symmetrierschaltung versehen, die erkennt, wenn die Klemmenspannung beim Laden, also die Ladespannung, den Nennwert übersteigt und dem weiteren Ansteigen der Ladespannung durch eine Bypass-Schaltung entgegenwirkt, welche den Ladestrom teilweise oder ganz am Kondensator vorbei führt. Die einfachste Maßnahme zur Symmetrierung der Spannungsaufteilung bei in Reihe geschalteten Kondensatoren besteht darin, den einzelnen Elementen ohmsche Widerstände parallel zu schalten. Hiermit sind jedoch permanente Verluste verbunden.

Ausgehend von diesem Stand der Technik liegt der Erfindung die Aufgabe zugrunde, eine Symmetrierschaltung der eingangs genannten Art zu verbessern, sowie einen damit ausgestatteten Energiespeicher zur Verfügung zu stellen.

Diese Aufgabe ist gelöst durch eine Symmetrierschaltung mit den Merkmalen des beigefügten Patentanspruchs 1 sowie durch einen Energiespeicher mit den Merkmalen des beigefügten Patentanspruchs 8. Ein besonders vorteilhaftes Verfahren zum Aufladen eines mit einer erfindungsgemäßen Symmetrierschaltung versehenen Energiespeicherelements findet sich im beigefügten Patentanspruch 7.

Vorteilhafte Weiterbildungen der Symmetrierschaltung ergeben sich aus den Ansprüchen 2 bis 6; vorteilhafte Ausgestaltungen des erfindungsgemäßen Energiespeichers sind in den Ansprüchen 9 und 10 enthalten.

Die erfindungsgemäße Bypass-Schaltung enthält also statt eines ohmschen Widerstands eine vom Energiespeicherelement gespeiste, mit aktiven elektrischen Bauelementen realisierte, spannungsgesteuerte Stromquelle zum Generieren eines Bypass-Stroms. Aus der Sicht des jeweiligen Energiespeicherelements stellt sich die Bypass-Schaltung als spannungsgesteuerte Stromsenke dar, so dass bei entsprechender Ansteuerung tatsächlich eine Spannungsbegrenzung stattfindet, und zwar nur oberhalb eines bestimmten Schwellenwertes der Klemmenspannung, wobei die Begrenzung vorteilhafterweise kontinuierlich einsetzt. Es ist ohne weiteres möglich, durch geeignete Dimensionierung der Schaltung einen linearen Zusammenhang zwischen dem Bypass-Strom und der unerwünschten Nenn-Überspannung einzustellen. Unterhalb des Spannungsnennwerts bleibt die Bypass-Schaltung unwirksam und daher verlustfrei, wobei ein stetiger Übergang aus dem unwirksamen in den begrenzenden Bereich gegeben ist. Bei Bedarf ist auch ein gewünschtes kontrolliertes Überfahren der Nennspannungsschwelle möglich.

Bevorzugt wird die spannungsgesteuerte Stromquelle im wesentlichen durch mindestens einen Leistungstransistor, beispielsweise einen MOSFET oder einen Bipolartransistor gebildet. Dieser Leistungstransistor stellt dann anstatt eines ohmschen Widerstands die notwendige Verlustsenke dar. Er übernimmt also neben der Schaltfunktion für einen ohmschen Parallelwiderstand auch die Funktion des ohmschen Widerstands.

Der Vorteil des spannungsgesteuerten MOSFET's ist seine hohe Stromverstärkungseigenschaft; allerdings ist der Mindestwert für die notwendige Gate-Source-Spannung für Mindestladeströme im Ampère-Bereich, wie insbesondere für Doppelschichtkondensatoren erwünscht, zu hoch. Je nach Einsatzfall braucht man deshalb für die Ansteuerung des MOSFET's ein separates Schaltnetzteil zum Hochsetzen der Steuerspannung.

Beim stromgesteuerten Bipolartransistor liegen die Verhältnisse umgekehrt: Die notwendige Basisspannung ist zwar vorteilhaft gering; der Basisstrom jedoch, der benötigt wird, um den Bipolartransistor hinreichend niederohmig aufsteuern zu können, kann problematisch sein. Um bei benötigten Bypass-Strömen von mehreren Ampere eine hinreichende Stromverstärkung sicherstellen zu können, kann es beispielsweise notwendig werden, eine aus zwei oder mehreren Bipolartransistoren bestehende Endstufe in Darlington-Schaltung aufzubauen.

Ein Leistungstransistor als Stromquelle kann dadurch spannungsgesteuert betrieben werden, dass ein Operationsverstärker vorgesehen ist, an dessen ersten Eingang eine Spannung anliegt, die der über dem Leistungstransistor liegenden Spannung entspricht, und dessem zweiten Eingang eine Referenzspannung aufgeschaltet wird, wobei der Ausgang des Operationsverstärkers zum Ansteuern des Leistungstransistors mit dessen Basis bzw. Gate verbunden ist. Der Operationsverstärker kann hierbei in einem integrierten Schaltkreis enthalten sein, der außerdem noch eine Referenzspannungsquelle enthält. Je nach angebotener Referenzspannung kann der erste Eingang des Operationsverstärkers über einen von ohmschen Widerständen gebildeten Spannungsteiler parallel zu den Anschlussklemmen des Leistungstransistors geschaltet werden.

Weitere Vorteile ergeben sich, wenn die spannungsgesteuerte Stromquelle um einen digitalen Signalausgang erweitert wird. Dieser meldet, wenn ein Bypass-Strom fließt, woraus sich die Information ableiten lässt, ob das zugehörige Energiespeicherelement bereits die Schwellenspannung überschritten hat und damit - bei nicht zu hohen Ladeströmen - auf den Nennenergieinhalt aufgeladen ist.

Bevorzugt kann die Erkennung und Meldung eines fließenden Bypass-Stromes über einen Optokoppler ausgegeben werden. Dies führt zu einer potentialfreien Rückmeldung des Ladezustands jedes einzelnen Energiespeicherelements und ermöglicht somit eine einfache logische Verschaltung der Zustandssignale. Wird zum Beispiel die Aufladung eines Moduls mit einer Vielzahl von in Reihe geschalteten Energiespeicherelementen so lange weitergeführt, bis jeder Optokoppler einen Bypass-Strom meldet, wird der gesamte erzielbare Nenn-Speicherinhalt aller Energiespeicherelemente zu 100 % ausgenutzt.

Das Erkennen und Melden eines fließenden Bypass-Stromes über den digitalen Signalausgang der erfindungsgemäßen Symmetrierschaltung ermöglicht darüber hinaus ein besonders vorteilhaftes schnelles Aufladen des Energiespeicherelements bzw. eines aus einer Anzahl von Energiespeicherelementen aufgebauten Energiespeichers, bei dem die digitalen Signalausgänge in einer ODER-Logik verschaltet sind Die Bypass-Schaltung ist naturgemäß nur für einen gewissen Maximalwert eines Bypass-Stromes ausgelegt, so dass zunächst der Ladestrom für das mit der Symmetrierschaltung versehene elektrische Energiespeicherelement grundsätzlich nicht über diesem Maximalwert liegen darf, da beim Überschreiten der Nennspannung des Energiespeicherelements der gesamte Ladestrom durch die Bypass-Schaltung fließen soll. Insbesondere um ein schnelleres Aufladen des Energiespeicherelements zu ermöglichen, ist es jedoch in den meisten Fällen wünschenswert, einen sehr viel höheren Ladestrom vorzusehen. Dies ist mit dem bevorzugt vorhandenen digitalen Signalausgang in der Symmetrierschaltung möglich: Sobald erkannt und gemeldet wird, dass ein Bypass-Strom zu fließen beginnt, kann der Ladestrom auf einen Wert abgesenkt werden, der eine Überlastung der Bypass-Schaltung ausschließt. Durch dieses besonders bevorzugte Ladeverfahren kann also, solange die Klemmenspannung des Energiespeicherelements nicht wesentlich über der Nennspannung liegt, auch mit sehr hohen Stromstärken aufgeladen werden.

Ein Energiespeicher, der eine Anzahl von in Reihe geschalteten elektrischen Energiespeicherelementen enthält und bevorzugt zur Stromausfallpufferung verwendet wird, kann also dann, wenn er mit erfindungsgemäßen Symmetrierschaltungen ausgestattet ist, einen sehr viel höheren Ausnutzungsgrad erzielen, als herkömmliche Energiespeicher. Wenn alle Symmetrierschaltungen eines solchen Energiespeichers zur Erkennung und Meldung eines fließenden Bypass-Stroms mit einem Optokoppler versehen sind, deren Zustandssignale mit einer ODER-Logik und einer UND-Logik verschaltet sind, ergibt sich eine optimale Führung des Energiespeichers: Sobald mindestens ein Optokoppler einen Bypass-Strom meldet (erkennbar über die ODER-Logik), liegt die Information vor, dass mindestens eines der Energiespeicherelemente seine Nennspannung überschritten hat. Sobald alle Optokoppler einen Bypass-Strom melden (erkennbar über die UND-Logik), ist klar, dass alle Energiespeicherelemente mindestens auf ihren Nenn-Energieinhalt aufgeladen sind; der Ladevorgang kann dann beendet werden. Auch hier ist es zur Erzielung eines vorteilhaften "Schnelllade"-Effekts mit hohen Stromstärken, die die einzelnen Bypass-Schaltungen an sich überfordern würden, vorteilhaft, wenn Mittel zum Begrenzen oder Regeln des Ladestroms in Abhängigkeit von den Signalen der Optokoppler vorhanden sind; denn dann kann ein hoher Ladestrom heruntergeregelt werden, sobald mindestens eines der Energiespeicherelemente seine Nennspannung überschritten hat und die zugehörige Bypass-Schaltung teilweise mit dem Ladestrom beaufschlagt wird.

Ausführungsbeispiele der Erfindung werden im Folgenden anhand der beigefügten Zeichnungen näher erläutert, wobei
Figur 1 ein Prinzipschaltbild für eine erfindungsgemäße Symmetrierschaltung,
Figur 2 ein Schaltbild eines ersten Ausführungsbeispiels,
Figur 3 ein Schaltbild eines zweiten Ausführungsbeispiels,
Figur 4 ein Diagramm eines Versuchsergebnisses und
Figur 5 ein Diagramm eines weiteren Versuchsergebnisses zeigt.

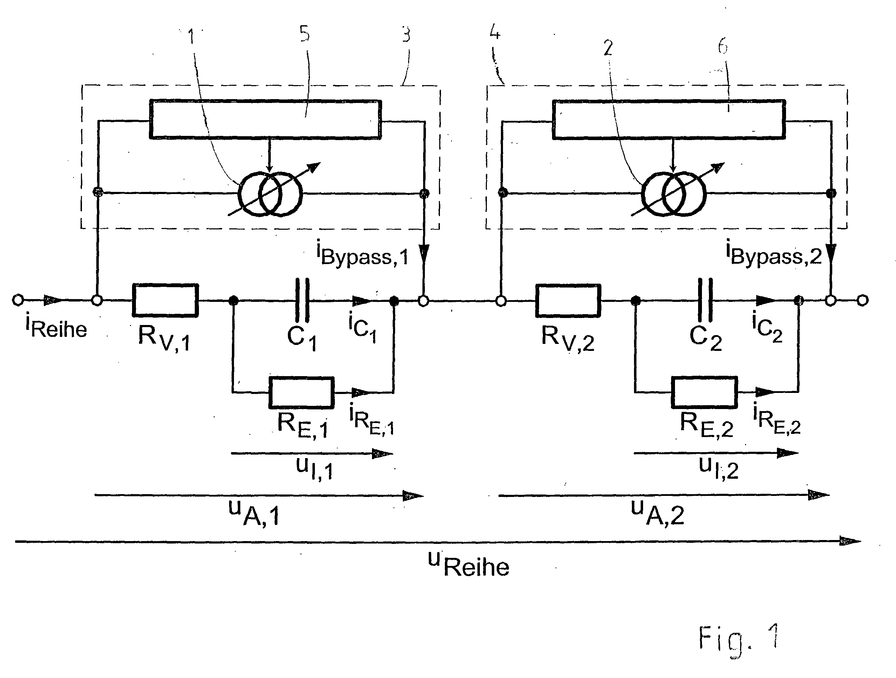

Das Prinzipschaltbild in Figur 1 zeigt beispielhaft die erfindungsgemäße Symmetrierung der Spannungsaufteilung einer Kondensatorreihenschaltung mit parallel geschalteten, spannungsgesteuerten Stromquellen 1, 2. Die beiden hier dargestellten, in Reihe geschalteten Kondensatoren sind durch jeweils einen idealen Kondensator C₁ und C₂, jeweils einen dazu parallel liegenden Entladewiderstand R_{E,1} und R_{E,2} sowie jeweils einen Vorwiderstand R_{V,1} und R_{V,2} modelliert. Die Spannung an jedem realen Kondensator ist dann durch u_{A,1} bzw. u_{A,2} gegeben. Parallel zum jeweiligen realen Kondensator ist je eine Bypass-Schaltung 3 bzw. 4 geschaltet. Diese Bypass-Schaltungen 3 und 4 bestehen jeweils prinzipiell aus einer Stromquelle 1 bzw. 2, die von einer parallel dazu geschalteten Spannungsmesseinheit 5 bzw. 6 gemäß einem vorgegebenen funktionalen Zusammenhang mit der Spannung u_{A,1} bzw. u_{A,2} gesteuert wird. Der oberhalb einer voreingestellten Schwellenspannung fließende Strom i_{Bypass} reduziert die in die jeweiligen idealen Kondensatoren C₁ und C₂ fließenden Teilströme i_{C1} und i_{C2}, wobei sich der Gesamtladestrom i_{Reihe} selbstverständlich nicht ändert. Hierdurch wird der Anstieg der Spannung uᵢ₁ bzw. uᵢ₂ an den idealen Kondensatoren C₁ und C₂ reduziert bzw. gestoppt.

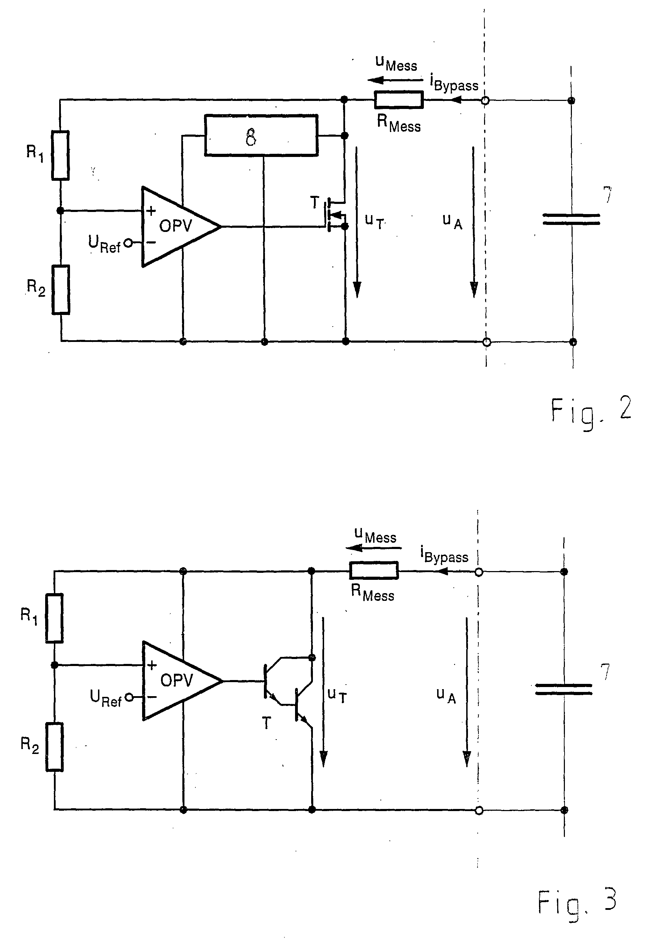

Figur 2 zeigt eine bevorzugte Realisierung einer erfindungsgemäßen spannungsgesteuerten Stromquelle mit einem als MOSFET ausgebildeten Leistungstransistor T. Dem (realen) Kondensator 7, der mit weiteren (nicht dargestellten) Kondensatoren in Reihe geschaltet ist, ist eine links von der durchbrochenen Linie gezeigte Bypass-Schaltung parallel geschaltet. Der Bypass-Strom i_{Bypass} wird über einen Messwiderstand R_{Mess} geleitet, an dem das Fließen eines Bypass-Stroms i_{Bypass} detektiert werden kann. Das Kernstück der Bypass-Schaltung ist der als MOSFET ausgestaltete Leistungstransistor T, über dessen Drain-Source-Strecke die Spannung u_{T} abfällt. Im Bypass-Betrieb wird die Spannung u_{T} auf die Kondensatornennspannung geregelt, wodurch der Bypass-Strom i_{Bypass} proportional zur Spannungsdifferenz (u_{A} - u_{T}) ansteigt. Die wiederum zum Leistungstransistor T parallel geschalteten ohmschen Widerstände R₁ und R₂ führen die herabgeteilte Spannung u_{T} auf einen Operationsverstärker OPV. Der Operationsverstärker OPV steuert mit seinem Ausgang das Gate des Leistungstransistors T, und zwar abhängig von der Differenz zwischen der an seinem positiven Eingang anliegenden, herabgeteilten Spannung u_{T} und einer an seinem negativen Eingang anliegenden Referenzspannung U_{Ref}. Um die Drain-Source-Strecke des MOSFET's hinreichend niederohmig aufsteuern zu können, muss der ansteuernde Operationsverstärker OPV eine Mindestspannung von typischerweise 5 V liefern können. Hierfür muss insbesondere dann, wenn es sich beim Kondensator 7 um einen Doppelschichtkondensator mit einer typischen Maximalspannung von 2,7 V handelt, ein Schaltnetzteil 8 zur Spannungserhöhung der OPV-Versorgung vorhanden sein.

Das in Figur 3 gezeigte Prinzipschaltbild unterscheidet sich im wesentlichen von dem in Figur 2 gezeigten Ausführungsbeispiel einer spannungsgesteuerten Stromquelle durch die Ausgestaltung des Leistungstransistors T: Der hier verwendete Leistungstransistor T besteht aus zwei Bipolartransistoren, die als Darlington-Endstufe verschaltet sind. Die Darlington-Schaltung ist insbesondere dann notwendig, wenn Bypassströme i_{Bypass} von mehreren Ampere fließen sollen. Zum Ansteuern der Bipolartransistoren in Darlington-Schaltung sind primär die zwei Basis-Emitter-Spannungen zu überwinden, so dass der hier wiederum für die Regelung benötigte Operationsverstärker OPV kein separates Schaltnetzteil zur Spannungserhöhung braucht, sondern mit der über dem Leistungstransistor T liegenden Spannung u_{T} versorgt werden kann. Die restlichen Elemente der hier gezeigten Schaltung sind gegenüber der Prinzipschaltung aus Figur 2 unverändert, so dass im übrigen auf die Beschreibung der Figur 2 verwiesen werden kann.

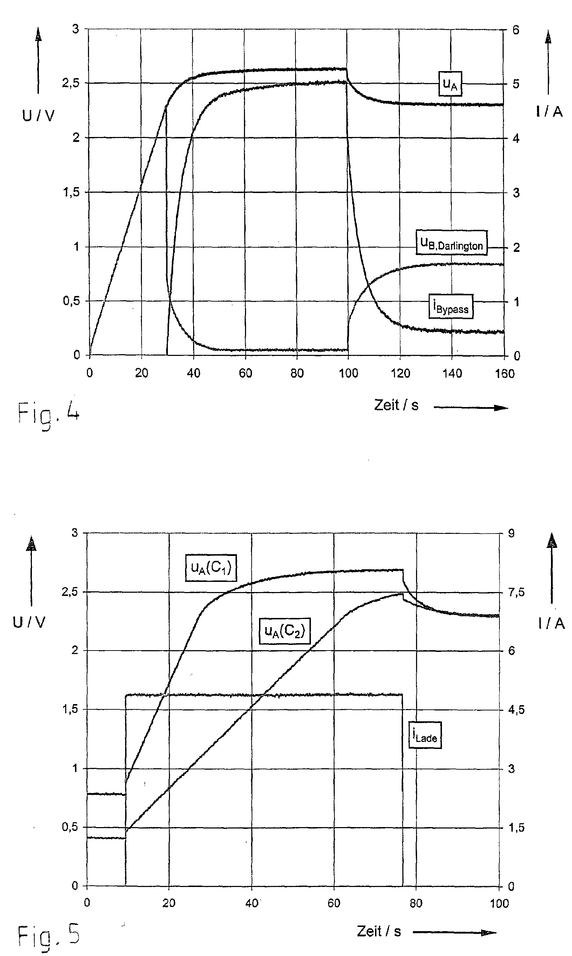

Figur 4 zeigt ein Versuchsergebnis, bei dem ein mit einer Bypassschaltung gemäß Figur 3 versehener Doppelschichtkondensator mit einem Ladestrom von 5 Ampere aufgeladen wird. Im Unterschied zu dem in Figur 3 gezeigten Aufbau besteht der Leistungstransistor der Bypass-Schaltung allerdings aus drei als Darlington-Endstufe verschalteten pnp-Transistoren. Aufgetragen über der Zeit ist der Verlauf der Kondensatorklemmenspannung u_{A}, des Bypass-Stroms i_{Bypass} sowie der Spannung an der Basis der Darlington-Konfiguration u_{B,Darlington}. Man erkennt, wie ab u_{A} = 2,3 V der zunächst lineare Anstieg der Spannung u_{A} zunehmend abgebremst wird, weil ein immer größerer Teil des Ladestromes auf die Bypass-Schaltung umgeleitet wird. Wenn der komplette Ladestrom über die Bypass-Schaltung fließt, bleibt die Kondensatorspannung u_{A} auf ihrem momentanen Wert von hier ca. u_{A} = 2,7 V stehen. Nach dem Abschalten des Ladestromes an der Stelle t = 100 s setzt über die Bypass-Schaltung die Entladung des Kondensators ein, welche so lange andauert, bis sich die Kondensatorspannung wieder auf u_{A} = 2,3 V reduziert hat. Am dritten Kurvenverlauf in Figur 4 kann man erkennen, dass die Ansteuerspannung u_{B,Darlington} an der Basis der Darlington-Konfiguration von der positiven Aussteuergrenze auf einen hinreichend kleinen Wert springen muss, um den Darlington aufzusteuern. Wegen des ca. 1,8 V hohen Spannungssprunges von u_{B,Darlington} beim Übergang in den Bypass-Betrieb kann durch ein den Basis-Emitter-Strecken parallel geschalteten Optokoppler sehr einfach, exakt und potentialgetrennt der Bypass-Zustand abgefragt werden.

Anhand eines weiteren Versuchsergebnisses, das in Figur 5 dargestellt ist, wird beispielhaft die spannungssymmetrierende Wirkung der erfindungsgemäßen Symmetrierschaltung veranschaulicht. Es wurden zwei Kondensatoren C₁ und C₂ mit unterschiedlichen Kapazitäten (C₂ = 2 C₁) in Reihe geschaltet und mit einem Ladestrom von 5A aufgeladen. Um die symmetrierende Wirkung gleichzeitig auch bei unterschiedlichen Anfangsspannungen zu demonstrieren, wurde letztere beim ersten Kondensator merklich höher gewählt als beim zweiten Kondensator. Da sich der erste Kondensator wegen der kleineren Kapazität C₁ aber sowieso schneller auflud, überschritt er umso früher die Spannungsschwelle von u_{A} = 2,3 V, als der zweite Kondensator. Entsprechend früher wurde bei ihm die Bypass-Schaltung aktiv und begrenzte die Klemmenspannung u_{A}(C1) auf zulässige Werte. Der Ladestrom i_{Lade} wurde abgeschaltet, kurz nachdem auch die Spannung u_{A}(C2) am zweiten Kondensator den erwünschten Nennwert u_{A} = 2,3 V überschritten hatte. Man erkennt, dass durch die Wirkung der spannungsgesteuerten Stromquellen nach dem Abschalten des Ladestroms i_{Lade} der Kondensator mit der höheren Spannung deutlich schneller entladen wird, und dadurch die beiden Kondensatorspannungen nach recht kurzer Zeit in einen praktisch identischen Spannungsverlauf übergehen.

Die größten Vorteile der erfindungsgemäßen Symmetrierschaltung entfalten sich bei Energiespeichern mit einer Anzahl von in Reihe geschalteten Doppelschichtkondensatoren. Mit Rücksicht auf die herstellerseitig angegebenen Kapazitätstoleranzen könnte ein solcher Energiespeicher ohne Symmetrierschaltung nur so betrieben werden, dass jeder Teilkondensator im Mittel nur noch mit etwas mehr als der halben Nennspannung ausgenutzt werden kann, um im stationären Betrieb des Energiespeichers die spannungsmäßige Überlastung einzelner Elemente sicher auszuschließen: Ausgehend vom vollständig entladenen Zustand könnten besonders niederkapazitive Teilkondensatoren bereits die Nennspannung erreichen, wenn besonders hochkapazitive Teilkondensatoren erst auf ca. 55 % der Nennspannung aufgeladen wären.

Beim Lade-Entlade-Betrieb eines Energiespeichers mit in Reihe geschalteten Energiespeicherelementen erfolgt durch die erfindungsgemäße Symmetrierschaltung schließlich ein regelmäßiges Nachsymmetrieren: Durch eine initialisierende symmetrische Vollladung aller Teilkondensatoren auf den Nennspannungswert fallen die Teilkondensatorspannungen bei einer Entladung umgekehrt proportional zu ihren jeweiligen Kapazitäten ab. Die Bypass-Schaltungen bleiben dabei ohne Einfluss, da sie unterhalb der Nennspannung nicht wirksam sind. Bei einer Wiederaufladung steigen die Teilspannungen der Teilkondensatoren umgekehrt proportional zu ihrer Kapazität an und treffen sich nur im Idealfall wieder exakt beim Nennspannungswert. Wenn bei jedem Wiederaufladen für ein "Überfahren" der Nennspannung gesorgt wird, wird durch die spannungsgesteuerte Zu- und Abschaltung der erfindungsgemäßen Bypass-Schaltungen automatisch eine Nachsymmetrierung durchgeführt. Da dieses Verhalten unabhängig von Verlauf und Höhe des Ladestromes ist, kann also insgesamt auch mit deutlich höheren Strömen als bisher geladen werden, ohne je einen Teilkondensator spannungsmäßig zu gefährden.

## Patentansprüche

1. Symmetrierschaltung für in Reihe geschaltete elektrische Energiespeicherelemente, insbesondere Kondensatoren, mit je einer für jedes Energiespeicherelement vorgesehenen Bypass-Schaltung (3, 4) zum Begrenzen der Ladespannung (u_{A}) oder des Ladespannungsanstiegs am jeweiligen Energiespeicherelement durch zumindest teilweise Umleitung des Ladestroms (i_{Lade}) auf die Bypass-Schaltung (3, 4),
**dadurch gekennzeichnet,**
**dass** die Bypass-Schaltung (3, 4) eine vom Energiespeicherelement gespeiste, spannungsgesteuerte Stromquelle (1, 2) zum Generieren eines Bypass-Stroms (i_{Bypass}) enthält.

2. Symmetrierschaltung nach Anspruch 1,
**dadurch gekennzeichnet,**
**dass** die spannungsgesteuerte Stromquelle (1, 2) im wesentlichen durch mindestens einen Leistungstransistor (T) gebildet ist.

3. Symmetrierschaltung nach Anspruch 2,
**dadurch gekennzeichnet,**
**dass** der Leistungstransistor (T) ein MOSFET oder ein Bipolartransistor ist.

4. Symmetrierschaltung nach einem der Ansprüche 2 oder 3,
**dadurch gekennzeichnet,**
**dass** ein Operationsverstärker (OPV) vorgesehen ist, an dessen ersten Eingang (+) eine Spannung anliegt, die der über dem Leistungstransistor (T) liegenden Spannung (u_{T}) entspricht, und dessem zweiten Eingang (-) eine Referenzspannung (U_{Ref}) aufgeschaltet ist, wobei der Ausgang des Operationsverstärkers (OPV) zum Ansteuern des Leistungstransistors (T) mit dessen Basis oder Gate verbunden ist.

5. Symmetrierschaltung nach einem der Ansprüche 1 bis 4,
**dadurch gekennzeichnet,**
**dass** zur Erkennung und Meldung eines Bypass-Stromes (i_{Bypass}) ein digitaler Signalausgang, insbesondere ein Optokoppler vorgesehen ist.

6. Symmetrierschaltung nach einem der Ansprüche 1 bis 5,
**dadurch gekennzeichnet,**
**dass** die Energiespeicherelemente Doppelschichtkondensatoren sind.

7. Verfahren zum Aufladen eines elektrischen Energiespeicherelements mit einer Symmetrierschaltung nach einem der Ansprüche 1 bis 6,
**dadurch gekennzeichnet,**
**dass** das Energiespeicherelement mit einem Ladestrom beaufschlagt wird, dessen Stromstärke über dem Wert liegt, für den die Bypass-Schaltung ausgelegt ist, und
**dass** der Ladestrom auf oder unter diesen Wert abgesenkt wird, sobald Strom durch die Bypass-Schaltung fließt.

8. Energiespeicher, insbesondere zur Stromausfallpufferung, mit einer Anzahl von in Reihe geschalteten elektrischen Energiespeicherelementen und je einer Symmetrierschaltung nach einem der Ansprüche 1 bis 7 für jedes Energiespeicherelement.

9. Energiespeicher nach Anspruch 8,
**dadurch gekennzeichnet,**
**dass** alle Symmetrierschaltungen zur Erkennung und Meldung eines fließenden Bypass-Stromes (i_{Bypass}) mit je einem Optokoppler versehen sind, wobei die Optokoppler mit einer ODER-Logik sowie einer UND-Logik verschaltet sind.

10. Energiespeicher nach Anspruch 9,
**dadurch gekennzeichnet,**
**dass** Mittel zum Begrenzen oder Regeln des Ladestroms (i_{Lade}) in Abhängigkeit von den Signalen der Optokoppler vorhanden sind.
